# EUROPÄISCHE PATENTSCHRIFT

(11) **EP 3 496 977 B1**
(45) Veröffentlichungstag und Bekanntmachung des Hinweises auf die Patenterteilung: **07.10.2020**
(21) Anmeldenummer: 17730454.0
(22) Anmeldetag: 12.06.2017
(51) Int. Cl.: B60R 25/24, B60R 25/20, B60R 25/102

(54) **VERFAHREN ZUM BETREIBEN EINER DIEBSTAHLSCHUTZVORRICHTUNG, DIEBSTAHLSCHUTZVORRICHTUNG FÜR EIN KRAFTFAHRZEUG UND KRAFTFAHRZEUG**
METHOD FOR OPERATING AN ANTI-THEFT DEVICE, ANTI-THEFT DEVICE FOR A MOTOR VEHICLE, AND MOTOR VEHICLE
PROCÉDÉ POUR FAIRE FONCTIONNER UN DISPOSITIF DE PROTECTION CONTRE LE VOL, DISPOSITIF DE PROTECTION CONTRE LE VOL POUR UN VÉHICULE À MOTEUR ET VÉHICULE À MOTEUR

(30) Priorität: 08.08.2016 DE 102016214687
(43) Veröffentlichungstag der Anmeldung: 19.06.2019
(73) Patentinhaber: Audi AG, 85045 Ingolstadt (DE)
(72) Erfinder: MÜLLER, Frank, 90537 Feucht (DE); GEIER, Tobias, 85221 Dachau (DE)
(86) Internationale Anmeldenummer: PCT/EP2017/064287
(87) Internationale Veröffentlichungsnummer: WO 2018/028857

(56) Entgegenhaltungen:
- EP-A1- 2 072 354
- WO-A1-2012/049693
- WO-A1-2013/072471
- DE-A1-102007 033 232
- DE-A1-102008 057 602
- DE-A1-102010 004 756
- DE-A1-102015 015 050
- FR-A1- 2 768 676
- FR-A1- 3 003 830
- JP-A- 2000 272 475

## Beschreibung

Die Erfindung betrifft ein Verfahren zum Betreiben einer Diebstahlschutzvorrichtung für ein Kraftfahrzeug. Zu der Erfindung gehört auch eine Diebstahlschutzvorrichtung, die gemäß dem erfindungsgemäßen Verfahren betreibbar ist. Schließlich umfasst die Erfindung auch ein Kraftfahrzeug mit der erfindungsgemäßen Diebstahlschutzvorrichtung.

Aus dem allgemeinen Stand der Technik sind schlüssellose Entriegelungs-und Startsysteme für Kraftfahrzeuge bekannt. Bei derartigen Systemen hat ein Nutzer des Kraftfahrzeugs lediglich einen Funkschlüssel des Kraftfahrzeugs mit sich zu führen, um sich Zugang zu dem Kraftfahrzeug zu verschaffen ohne den Funkschlüssel aktiv zu benutzen. Zum Entriegeln des Kraftfahrzeugs muss sich der Nutzer mit dem Funkschlüssel in einer näheren Umgebung des Kraftfahrzeugs befinden, damit der Funkschlüssel zum Entriegeln des Kraftfahrzeugs mit dem Kraftfahrzeug über ein Funksignal kommunizieren kann. Die Funkstrecke ist also auf eine vorbestimmte Entfernung zum Kraftfahrzeug begrenzt.

Derartige Entriegelungs- und Startsysteme, welche nicht aktiv durch einen Nutzer kontrolliert werden, können durch Dritte manipuliert werden. Beispielsweise kann sich ein Dritter Zugang zu dem Kraftfahrzeug verschaffen, indem er die Funkstrecke des Funkschlüssel, beispielsweise mit Hilfe von Antennen, verlängert. Ist das Kraftfahrzeug erst einmal entriegelt und gestartet, lässt sich ein Diebstahl des Kraftfahrzeugs nicht mehr abwenden.

Um Maßnahmen gegen den Diebstahl des Kraftfahrzeugs zu ergreifen, sind aus dem Stand der Technik unterschiedliche Ansätze bekannt.

Dazu schlägt beispielsweise die DE 10 2010 004 756 A1 ein Verfahren zum Melden eines Diebstahls und/oder eines unbefugten Bewegens eines abgestellten Fahrzeuges vor. Dazu ist in dem zu überwachenden Fahrzeug eine Empfangseinrichtung vorgesehen, die nach dem Verschließen des Kraftfahrzeugs den Standort des Fahrzeugs bestimmt und die Koordinaten des Standorts in einer Speichereinrichtung hinterlegt. Anschließend führt die Empfangseinrichtung in regelmäßigen Zeitabständen eine Standortbestimmung des Fahrzeuges durch und vergleicht den tatsächlichen Standort mit dem der Speichereinrichtung hinterlegten Standort. Liegt eine Abweichung des tatsächlichen Standortes von dem hinterlegten Standort vor, so wird mittels einer Sendeeinrichtung eine Meldung an eine feste Stelle abgesandt.

In der DE 10 2012 015 796 A1 ist eine Wegfahrsperre für ein Kraftfahrzeug mit einem Bewegungssensor und mit einer Elektronik zur Auswertung der vom Bewegungssensor detektierten Bewegung zur Erkennung eines Diebstahls beschrieben. Die Elektronik legt im Falle eines Diebstahls das Motormanagement still und/oder löst einen Alarm aus.

Verfahren oder Vorrichtungen zum Diebstahlschutz, welche eine Positionsbestimmung durchführen oder eine Bewegung des Kraftfahrzeugs bestimmen, sind besonders aufwändig. Die Standort- oder Bewegungsauswertung des Kraftfahrzeugs nimmt besonders viel Zeit in Anspruch, wodurch auf einen vermeintlichen Diebstahl des Kraftfahrzeugs erst mit einer deutlichen Zeitverzögerung reagiert werden kann.

Damit es gar nicht erst zu einem unbefugten Bewegen des Kraftfahrzeugs kommt, ist in der DE 10 2004 052 787 A1 eine präventive Maßnahme beschrieben. Diese Maßnahme umfasst ein Verfahren und eine Vorrichtung zum Diebstahlschutz für ein Fahrzeug. Dabei werden zwischen einer Authentifizierungseinheit und einem Schlüsselelement des Kraftfahrzeugs verschlüsselte Daten ausgetauscht. Die Authentifizierungseinheit überprüft anhand von in einem Speicher des Schlüsselelements und in einem Speicher der Authentifizierungseinheit gespeicherte Authentifizierungsdaten, ob das Schlüsselelement ein der Authentifizierungseinheit und somit dem Fahrzeug zugeordnetes Schlüsselelement ist. Falls dies nicht der Fall ist, kann ein Fahrer das Fahrzeug nicht starten. Eine solche präventive Maßnahme ist durch den Authentifizierungsprozess besonders aufwändig und komplex gestaltet.

FR 3 003 830 A1 offenbart ein Verfahren zum Betreiben einer Diebstahlschutzvorrichtung.

Aufgabe der vorliegenden Erfindung ist es daher, besonders schnell sowie auf besonders einfache und zuverlässige Art und Weise einen Diebstahl eines Kraftfahrzeugs zu erfassen und Gegenmaßnahmen einzuleiten.

Diese Aufgabe wird durch ein Verfahren zum Betreiben einer Diebstahlschutzvorrichtung für ein Kraftfahrzeug sowie durch eine Diebstahlschutzvorrichtung für ein Kraftfahrzeug mit den Merkmalen der unabhängigen Patentansprüche gelöst. Vorteilhafte Ausgestaltungen mit zweckmäßigen und nicht trivialen Weiterbildungen der Erfindung sind in den abhängigen Ansprüchen angegeben.

Bei dem erfindungsgemäßen Verfahren zum Betreiben einer Diebstahlschutzvorrichtung für ein Kraftfahrzeug wird ein Innenraum des Kraftfahrzeugs nach einem Starten des Kraftfahrzeugs mittels einer Erfassungseinrichtung der Diebstahlschutzvorrichtung überwacht. Das Kraftfahrzeug wird dabei bei einem Empfangen eines Funksignals einer funkbasierten Fernbedieneinrichtung des Kraftfahrzeugs entriegelt und nach dem Entriegeln durch Betätigen eines Start-Stopp-Bedienelements gestartet. Das Kraftfahrzeug ist bevorzugt ohne einen Einsatz eines mechanischen Schlüssel, also schlüssellos, entriegelt und gestartet worden. Der Benutzer des Kraftfahrzeugs hat also nicht aktiv mittels des mechanischen Schlüssels das Kraftfahrzeug entriegelt und in einem Zündschloss gedreht. Das Kraftfahrzeug kann also bevorzugt eine Keyless-Funktion zum Entriegeln der Tür oder Türen des Kraftfahrzeugs und zum Starten des Kraftfahrzeugs aufweisen. Bei der Keyless-Funktion kann die funkbasierte Bedieneinrichtung über Funksignale mit dem Kraftfahrzeug kommunizieren. Dabei erfolgt bevorzugt ein Authentifizierungsprozess. Bei einer erfolgreichen Authentifizierung kann eine Entriegelung und ein Starten des Kraftfahrzeugs autorisiert werden. Bei der funkbasierten Fernbedieneinrichtung kann es sich beispielsweise um einen Funkschlüssel des Kraftfahrzeugs oder um ein portables mobiles Endgerät, wie zum Beispiel ein Smartphone, handeln.

Zum Überwachen des Innenraums des Kraftfahrzeugs wird durch die Erfassungseinrichtung ein auf den Innenraum beschränktes Suchsignal an die funkbasierte Fernbedieneinrichtung in dem Innenraum des Kraftfahrzeugs ausgegeben. Mit anderen Worten kann zum Abstimmen des Innenraums des Kraftfahrzeugs ein auf den Innenraum abgestimmtes Suchsignal an die funkbasierte Fernbedieneinrichtung ausgesendet werden. Damit das Suchsignal auf den Innenraum des Kraftfahrzeugs beschränkt ist, kann die Erfassungseinrichtung dazu eingerichtet sein, das Suchsignal in einem vorbestimmten Aussendewinkel und/oder mit einer vorbestimmten Signalstärke auszusenden. Die funkbasierte Fernbedieneinrichtung ist dabei dazu eingerichtet, bei Empfangen des Suchsignals ein Erfassungssignal auszugeben. Die funkbasierte Fernbedieneinrichtung kann zum Aussenden und Empfangen eines Funksignals, also des Suchsignals und des Erfassungssignals, eine Sende-und Empfangseinheit aufweisen. Besonders bevorzugt kommuniziert die funkbasierte Fernbedieneinrichtung mittels der Erfassungseinrichtung über Nahbereichskommunikation. Mit Nahbereichskommunikation ist bevorzugt eine Kommunikation in einem vorbestimmten Bereich in oder um das Kraftfahrzeug gemeint. Bei der Nahbereichskommunikation kann die funkbasierte Fernbedieneinrichtung dazu eingerichtet sein, im Low-Frequency Funkbereich (LF Funkbereich) das Suchsignal zu empfangen und im High-Frequency Funkbereich (HF Funkbereich) ein Funksignal auszusenden. Alternativ oder zusätzlich kann bei der Nahbereichskommunikation die funkbasierte Fernbedieneinrichtung dazu eingerichtet sein, mittels Nahfeldkommunikation oder Near-Field-Communication zu kommunizieren. Alternativ oder zusätzlich kann die funkbasierte Fernbedieneinrichtung auch dazu eingerichtet sein, über Bluetooth zu kommunizieren.

Falls ein Empfangen des Erfassungssignals mittels der Erfassungseinrichtung bis zu einer vorbestimmten Suchzeit ausbleibt, wird eine Warnmeldung an eine fahrzeugexterne Einheit ausgesendet. Die Suchzeit startet beispielsweise, sobald die Erfassungseinrichtung das Suchsignal ausgegeben hat. Die Suchzeit kann ein vorbestimmtes Zeitintervall in einem Bereich von 0,5 Sekunden bis 120 Sekunden sein, zum Beispiel 10 Sekunden betragen.

Dadurch ergibt sich der Vorteil, dass auf besonders einfache und zuverlässige Art und Weise ein unbefugtes Bewegen des Kraftfahrzeugs, also ein Diebstahl des Kraftfahrzeugs, erfasst und nach außen gemeldet werden kann. Durch das Aussenden einer Warnmeldung an eine fahrzeugexterne Einheit können besonders schnell und zuverlässig Maßnahmen gegen den Diebstahl ergriffen werden.

Zu der Erfindung gehören optionale Weiterbildungen, durch deren Merkmale sich zusätzliche Vorteile ergeben.

Gemäß der Erfindung gibt die fahrzeugexterne Einheit nach Empfangen der Warnmeldung ein Steuersignal an das Kraftfahrzeug aus, wobei durch das Steuersignal ein Fahrbetrieb des gestarteten Kraftfahrzeugs gesteuert wird. Beispielsweise kann eine Steuereinrichtung des Kraftfahrzeugs dazu eingerichtet sein, das Steuersignal zu empfangen. Die Steuereinrichtung kann nach Empfangen des Steuersignals bevorzugt dazu eingerichtet sein, eine Geschwindigkeit des Kraftfahrzeugs zu reduzieren oder das Kraftfahrzeug anzuhalten oder einen Lenkwinkel eines Lenkrads des Kraftfahrzeugs als Fahrbetrieb einzustellen. Durch die Einstellung des Lenkradwinkels kann das Kraftfahrzeug in eine vorbestimmte Richtung gelenkt werden. Durch die Reduzierung der Geschwindigkeit oder einen Stillstand des Kraftfahrzeugs kann Zeit bis zu einem Einleiten weiterer Maßnahmen verschafft werden. Durch das externe Eingreifen der fahrzeugexternen Einheit kann ein Diebstahl des Kraftfahrzeugs aufgehalten werden.

Erfindungsgemäß erfasst die fahrzeugexterne Einheit nach dem Empfangen der Warnmeldung zusätzlich eine Position des Kraftfahrzeugs. In Abhängigkeit von der Position des Kraftfahrzeugs kann die fahrzeugexterne Einheit dann das Steuersignal ausgeben. Die Positionsbestimmung des Kraftfahrzeugs kann bevorzugt durch ein Ortungssystem, wie beispielsweise einem GPS-Tracker, erfolgen. Soll beispielsweise das Kraftfahrzeug nach Empfangen der Warnmeldung gestoppt, also zum Stillstand gebracht, werden, so kann durch die Positionserfassung sichergestellt werden, dass das Kraftfahrzeug nur an befugten oder verkehrssicheren Orten oder Stellen gestoppt werden kann, ohne weitere Verkehrsteilnehmer zu gefährden. Dadurch kann eine Sicherheit der Diebstahlschutzvorrichtung erhöht werden.

Erfindungsgemäß wird vorgesehen, dass nach Empfangen der Warnmeldung zwischen der fahrzeugexternen Einheit und dem Kraftfahrzeug eine unidirektionale oder bidirektionale Sprachverbindung aufgebaut wird. Bei einer unidirektionalen Sprechverbindung kann beispielsweise lediglich die fahrzeugexterne Einheit mit dem Kraftfahrzeug kommunizieren. Dabei kann ein Benutzer des Kraftfahrzeugs, welcher sich in dem Innenraum befindet, nicht mit der fahrzeugexternen Einheit kommunizieren oder sprechen. Bei einer bidirektionalen Sprechverbindung können beide Parteien, also die fahrzeugexterne Einheit und der Benutzer in dem Kraftfahrzeug, miteinander über die Sprechverbindung kommunizieren. Handelt es sich bei der fahrzeugexternen Einheit beispielsweise um eine Einsatzzentrale oder Polizeidienstelle, so kann diese beispielsweise bei einer unidirektionalen Sprechverbindung den Benutzer oder Fahrer des Kraftfahrzeugs dazu auffordern, das Kraftfahrzeug anzuhalten. Reagiert der Fahrer des Kraftfahrzeugs nicht, so können weitere Maßnahmen durch die Einsatzzentrale oder Polizeidienststelle eingeleitet werden. Bei einer bidirektionalen Sprechverbindung kann die Einsatzzentrale oder die Polizeidienststelle mit dem Fahrer des Kraftfahrzeugs kommunizieren, um so beispielsweise den Grund des unbefugten Bewegens des Kraftfahrzeugs herauszufinden. Durch die Sprachverbindung kann die Zuverlässigkeit der Diebstahlschutzvorrichtung erhöht werden. Ferner kann durch die fahrzeugexterne Einheit abgewogen werden, welche Gegenmaßnahmen sinnvoll sind.

In vorteilhafter Weise gibt die Erfassungseinrichtung die Warnmeldung an eine in der Erfassungseinrichtung hinterlegte Mobilfunknummer eines portablen mobilen Endgeräts aus. Beispielsweise kann es sich bei der Mobilfunknummer um die Mobilfunknummer des portablen mobilen Endgeräts eines Eigentümers des Kraftfahrzeugs handeln. Als Warnmeldung kann eine Kurznachricht (SMS) oder Sprachnachricht ausgesendet werden, welche den Eigentümer des Kraftfahrzeugs darauf hinweist, dass das Kraftfahrzeug unbefugt bewegt worden ist. Zusätzlich oder alternativ kann die Warnmeldung auch eine aktuelle Position des Kraftfahrzeugs übermitteln. Dadurch kann der Eigentümer besonders schnell und zuverlässig auf einen Diebstahl des Kraftfahrzeugs hingewiesen werden. Wird die Warnmeldung beispielsweise an die Service-Zentrale des Herstellers ausgesendet, so kann die Service-Zentrale weitere Maßnahmen ergreifen. Als weitere Maßnahme kann die Service-Zentrale beispielsweise den Eigentümer über den Diebstahl benachrichtigen.

Erfindungsgemäß wird vorgesehen, dass die fahrzeugexterne Einheit eine Einsatzzentrale und/oder eine Service-Zentrale eines Herstellers des Kraftfahrzeugs umfasst, an welche die Warnmeldung ausgegeben wird. Bei der Einsatzzentrale kann es sich beispielsweise um eine Verkehrsleitstelle oder eine Polizeidienstelle handeln. Das Ausgeben der Warnmeldung an die Einsatzzentrale kann beispielsweise über ein eCall-System (Emergency Call System) des Kraftfahrzeugs erfolgen. Bei der Service-Zentrale kann es sich beispielsweise um ein Call-Center des Herstellers handeln. Die Warnmeldung kann beispielsweise mittels eines Connect-Dienst des Herstellers, wie beispielsweise Audi-Connect, an die Service-Zentrale übermittelt oder ausgesendet werden.

Eine weitere vorteilhafte Ausführungsform sieht vor, dass zusätzlich zu dem Ausgeben der Warnmeldung an die fahrzeugexterne Einheit ein Hinweissignal über eine Ausgabeeinheit, welche in dem Innenraum des Kraftfahrzeugs angeordnet ist, ausgegeben wird. Bevorzugt wird das Hinweissignal vor dem Ausgeben der Warnmeldung über die Ausgabeeinheit ausgegeben. Beispielsweise kann es sich bei der Ausgabeeinheit um ein Display oder einen Bildschirm im Innenraum des Kraftfahrzeugs handeln. Insbesondere kann das Display an einer Mittelkonsole des Kraftfahrzeugs angeordnet sein. Alternativ kann es sich bei der Ausgabeeinheit auch um eine akustische Ausgabeeinheit, wie beispielsweise ein Mikrophon, handeln. Durch die Ausgabeeinheit kann ein Fahrer im Innenraum des Kraftfahrzeugs optisch oder akustisch darauf hingewiesen werden, dass durch die Erfassungseinrichtung keine funkbasierte Fernbedieneinrichtung im Innenraum des Kraftfahrzeugs detektiert oder erfasst werden konnte. Als akustisches oder optisches Hinweissignal kann beispielsweise der Wortlaut oder Schriftzug "Schlüssel nicht gefunden" oder "Key not found" ausgegeben werden. Beispielsweise kann sich die funkbasierte Fernbedieneinrichtung an einer für die Erfassungseinrichtung nicht detektierbaren Stelle im Kraftfahrzeug befinden. Ist das der Fall, würde fälschlicherweise eine Warnmeldung ausgegeben werden. Durch die Ausgabe des Hinweissignals können Fehlermeldungen reduziert werden. Dadurch wird eine Zuverlässigkeit der Diebstahlschutzvorrichtung erhöht.

Um das erfindungsgemäße Verfahren durchführen zu können, ist durch die Erfindung auch eine Diebstahlschutzvorrichtung für ein Kraftfahrzeug bereitgestellt. Diebstahlschutzvorrichtung umfasst eine Erfassungseinrichtung, welche dazu eingerichtet ist, einen Innenraum des Kraftfahrzeugs nach dem Starten des Kraftfahrzeugs zu überwachen. Zudem ist die Erfassungseinrichtung dazu eingerichtet, zum Überwachen des Innenraums des Kraftfahrzeugs in dem Innenraum des Kraftfahrzeugs ein auf den Innenraum beschränktes Suchsignal auszugeben. Des Weiteren ist die Erfassungseinrichtung nur dann dazu eingerichtet, eine Warnmeldung an eine fahrzeugexterne Einheit auszugeben, falls ein Empfangen eines Erfassungssignals nach dem Ausgeben des Suchsignals ausbleibt.

In vorteilhafter Weise ist die Erfassungseinrichtung dazu eingerichtet ist, mittels Nahfeldkommunikation das Suchsignal zu senden und/oder das Erfassungssignal zu empfangen. Die Nahfeldkommunikation kann auch als Near-Field-Communication bezeichnet werden. Die Nahfeldkommunikation ist insbesondere ein auf der RFID-Technik basierender internationaler Übertragungsstandard zum kontaktlosen Austausch von Daten per Funktechnik über eine vorbestimmte Strecken. Beispielsweise kann die Erfassungseinrichtung das Suchsignal an die funkbasierte Fernbedieneinrichtung ausgeben. Die funkbasierte Fernbedieneinrichtung kann bei Empfangen des Suchsignals dazu eingerichtet sein, ein Erfassungssignal auszugeben.

Die Diebstahlschutzvorrichtung kann in der beschriebenen Weise in einem Kraftfahrzeug realisiert sein. Entsprechend sieht die Erfindung auch ein Kraftfahrzeug mit einer Ausführungsform der erfindungsgemäßen Diebstahlschutzvorrichtung vor. Das erfindungsgemäße Kraftfahrzeug ist bevorzugt als Kraftwagen, insbesondere als Personenkraftwagen, ausgestaltet.

Die für das erfindungsgemäße Verfahren beschriebenen Vorteile und bevorzugten Ausführungsformen gelten auch für das erfindungsgemäße Kraftfahrzeug und die erfindungsgemäße Diebstahlschutzvorrichtung und umgekehrt.

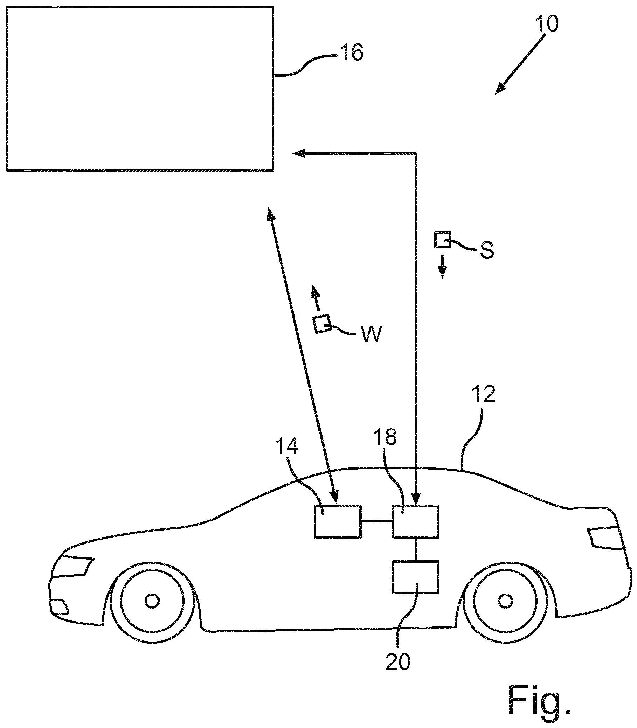

Im Folgenden ist ein Ausführungsbeispiel der Erfindung beschrieben. Hierzu zeigt die einzige Figur (Fig.) eine schematische Darstellung einer Diebstahlschutzvorrichtung 10 für ein Kraftfahrzeug 12.

Bei dem im Folgenden erläuterten Ausführungsbeispiel handelt es sich um eine bevorzugte Ausführungsform der Erfindung. Des Weiteren ist die beschriebene Ausführungsform auch durch weitere der bereits beschriebenen Merkmale der Erfindung ergänzbar.

Das Kraftfahrzeug 12 verfügt bevorzugt über Keyless-Funtionen oder schlüssellose Funktionen. Mit anderen Worten kann es sich bei dem Kraftfahrzeug 12 um ein Keyless-Fahrzeug handeln. Das Kraftfahrzeug 12 kann dabei ohne aktive Benutzung einer funkbasierten Fernbedieneinrichtung entriegelt und durch das Betätigen eines Start-Stopp-Bedienelements, insbesondere einer Start-Stopp-Taste, in einem Innenraum des Kraftfahrzeugs 12 gestartet werden. Bei der funkbasierten Fernbedieneinrichtung kann es sich beispielsweise um einen Funkschlüssel des Kraftfahrzeugs 12 oder ein portables mobiles Endgerät, insbesondere um ein Smartphone, handeln. Damit ein Benutzer des Kraftfahrzeugs 12 in das zunächst abgestellte und verriegelte Kraftfahrzeug 12 einsteigen und das Kraftfahrzeug 12 starten kann, kann die funkbasierte Fernbedieneinrichtung dazu eingerichtet sein, mittels Nahbereichskommunikation mit dem Kraftfahrzeug 12 zu kommunizieren. Mit Nahbereichskommunikation ist hier eine Kommunikation zwischen der funkbasierten Fernbedieneinrichtung und dem Kraftfahrzeug in oder um einen vorbestimmten Bereich oder Abstand zu dem Kraftfahrzeug 12 gemeint. Beispielsweise kann die funkbasierte Fernbedieneinrichtung mittels Bluetooth oder Near-Field-Communication oder in einem HF-Funkbereich oder LF-Funkbereich mit dem Kraftfahrzeug kommunizieren.

Möchte der Benutzer das Kraftfahrzeug 12 aufsperren, so muss er lediglich die funkbasierte Fernbedieneinrichtung mit sich führen und beispielsweise einen Türgriff des Kraftfahrzeugs 12 berühren. Dafür kann das Kraftfahrzeug 12 am Türgriff beispielsweise einen Sensor, wie beispielsweise einen kapazitiven Sensor, oder einen Kontakt am Türschloss aufweisen. Sobald mittels des Sensors eine Annäherung an den Türgriff oder eine Betätigung des Türgriffs erfasst worden ist, sendet das Kraftfahrzeug, insbesondere Kommunikationseinheit des Kraftfahrzeugs, ein Anfragesignal an die funkbasierte Fernbedieneinrichtung aus. Ist die funkbasierte Fernbedieneinrichtung in entsprechender Reichweite, so empfängt sie das Anfragesignal, decodiert es und sendet ein Signal mit einer neuen Codierung wieder aus. Im Kraftfahrzeug 12 wird dieses Signal wiederum decodiert und im Falle einer erfolgreichen Authentifizierung wird eine Entriegelung des Kraftfahrzeugs 12 autorisiert.

Die Diebstahlschutzvorrichtung 10 setzt bevorzugt dann ein, sobald das Kraftfahrzeug 12 gestartet wurde. Die Diebstahlschutzvorrichtung 10 weist dazu eine Erfassungseinrichtung 14 auf. Die Erfassungseinrichtung 14 kann bevorzugt Bestandteil eines Keyless-Systems des Kraftfahrzeugs 12 sein. Dabei ist die Erfassungseinrichtung 14 der Diebstahlschutzvorrichtung 10 dazu eingerichtet, den Innenraum des Kraftfahrzeugs 12 nach dem Starten des Kraftfahrzeugs 12 zu überwachen. Dazu gibt die Erfassungseinrichtung 14 in dem Innenraum des Kraftfahrzeugs 12 an die funkbasierte Fernbedieneinrichtung ein auf den Innenraum beschränktes Suchsignal aus. Beispielsweise kann die Erfassungseinrichtung 14 an einem Dachhimmel des Kraftfahrzeugs 12, insbesondere über einer Mittelkonsole des Kraftfahrzeugs 12, angeordnet sein. Das Suchsignal kann beispielsweise durch eine vorbestimmte Signalstärke des Suchsignals oder einen Aussendewinkel des Suchsignals auf den Innenraum des Kraftfahrzeugs 12 begrenzt sein.

Die funkbasierte Fernbedieneinrichtung ist dazu eingerichtet, das Suchsignal zu empfangen. Ferner ist die funkbasierte Fernbedieneinrichtung bei Empfangen des Suchsignals dazu eingerichtet, ein Erfassungssignal auszugeben. Zum Empfangen des Suchsignals und Aussenden des Erfassungssignals weist die funkbasierte Fernbedieneinrichtung bevorzugt eine Sende-und Empfangseinheit oder Nahfeldkommunikationseinrichtung auf. Damit die funkbasierte Fernbedieneinrichtung überhaupt auf das Suchsignal reagieren kann, befindet sich die funkbasierte Fernbedieneinrichtung bevorzugt in dem Innenraum des Kraftfahrzeugs 12.

Durch das Aussenden des Suchsignals startet eine vorbestimmte Suchzeit. Bei der vorbestimmten Suchzeit kann es sich um ein vorbestimmtes Zeitintervall zwischen 5 Sekunden und 60 Sekunden handeln. Empfängt die Erfassungseinrichtung 14 nach Ablauf der vorbestimmten Suchzeit, von beispielsweise 10 Sekunden, kein Erfassungssignal von der funkbasierten Fernbedieneinrichtung, so sendet die Erfassungseinrichtung 14 eine Warnmeldung W an eine fahrzeugexterne Einheit 16 aus. Mit fahrzeugextern ist hier bevorzugt gemeint, dass sich die Einheit außerhalb des Kraftfahrzeugs, insbesondere in einer Umgebung des Kraftfahrzeugs, befindet.

Die fahrzeugexterne Einheit 16 kann eine Einsatzzentrale und/oder eine Service-Zentrale eines Herstellers des Kraftfahrzeugs 12 und/oder ein portables mobiles Endgerät umfassen. In Abhängigkeit davon, an wen die Warnmeldung ausgegeben wird, können unterschiedliche Maßnahmen ergriffen werden.

Bei dem portablen mobilen Endgerät kann es sich beispielsweise um das portable mobile Endgerät eines Eigentümers des Kraftfahrzeugs 12 handeln. Beispielsweise kann der Erfassungseinrichtung 14 eine Mobilfunknummer des portablen mobilen Endgeräts hinterlegt sein. Das portable mobile Endgerät kann beispielsweise auch die funkbasierte Fernbedieneinrichtung sein. Sobald die Erfassungseinrichtung 14 kein Erfassungssignal empfängt, kann die Erfassungseinrichtung 14 dazu eingerichtet sein, eine Textnachricht oder eine Sprachnachricht als Warnmeldung W an die Mobilfunknummer auszusenden. Dabei kann die Warnmeldung beispielsweise einen Hinweis auf ein unbefugtes Bewegen des Kraftfahrzeugs 12 umfassen. Zusätzlich kann die Warnmeldung W eine Position des Kraftfahrzeugs 12 umfassen. Die Warnmeldung W kann beispielsweise in Form einer Kurznachricht, wie beispielsweise einer SMS (Short Message Service), ausgegeben werden. Durch den aktuellen Standort des Kraftfahrzeugs 12 kann der Eigentümer abwägen, ob das Kraftfahrzeug unberechtigt bewegt wurde. Nach Erhalt der Warnmeldung W kann der Eigentümer weitere Maßnahmen ergreifen und beispielsweise die Polizei verständigen.

Alternativ oder zusätzlich kann die fahrzeugexterne Einheit 16 die Einsatzzentrale umfassen. Sobald die Erfassungseinrichtung 14 kein Erfassungssignal von der funkbasierten Fernbedieneinrichtung empfängt, kann die Erfassungseinrichtung 14 dazu eingerichtet sein, die Warnmeldung W an die Einsatzzentrale auszugeben. Die Einsatzzentrale kann nach Empfangen der Warnmeldung W auf die Warnmeldung W reagieren. So kann die Einsatzzentrale nach Empfangen der Warnmeldung W ein Steuersignal S an das Kraftfahrzeug 12 ausgeben oder aussenden. Beispielsweise kann das Kraftfahrzeug 12 eine Steuereinrichtung 18 aufweisen, welche dazu eingerichtet ist, das Steuersignal S zu empfangen. Durch das Steuersignal S kann ein Fahrbetrieb des Kraftfahrzeugs 12 gesteuert werden. Dazu kann beispielsweise die Steuereinrichtung 18 dazu eingerichtet sein, einen Motor 20 des Kraftfahrzeugs 12 anzusteuern. Durch das Ansteuern des Motors 20 kann beispielsweise die Geschwindigkeit des Kraftfahrzeugs 12 reduziert oder das Kraftfahrzeug 12 zum Stillstand gebracht werden. Mit einer Steuerung des Fahrbetriebs ist also bevorzugt ein Eingreifen oder Steuern der Fahrdynamik oder der Bewegung des Kraftfahrzeugs 12 gemeint.

Um sicherzustellen, dass das Kraftfahrzeug 12 nicht an einem unbefugten Orten angehalten oder gesteuert wird, kann die Steuereinrichtung 18, sobald sie die Warnmeldung W empfängt, das Kraftfahrzeug 12 orten oder eine aktuelle Position des Kraftfahrzeugs 12 bestimmen. Die Bestimmung der Position des Kraftfahrzeugs kann beispielsweise über ein Ortungs-System, beispielsweise mittels eines GPS-Trackers, erfolgen. Alternativ kann auch bereits die Warnmeldung W eine aktuelle Position des Kraftfahrzeugs 12 umfassen.

Alternativ oder zusätzlich kann die fahrzeugexterne Einheit 16 die Service-Zentrale des Herstellers des Kraftfahrzeugs 12 umfassen. Ist beispielsweise der Erfassungseinrichtung 14 keine Mobilfunknummer des portablen mobilen Endgeräts des Eigentümer des Kraftfahrzeugs 12 hinterlegt, so kann die Erfassungseinrichtung 14 die Warnmeldung W an die Service-Zentrale des Herstellers des Kraftfahrzeugs 12 aussenden. Die Service-Zentrale kann dann entsprechende Maßnahmen einleiten. Zum Beispiel kann die Service-Zentrale den Eigentümer des Kraftfahrzeugs 12 verständigen. Zusätzlich kann die Service-Zentrale die Polizei verständigen.

Neben dem Aussenden der Warnmeldung an die fahrzeugexterne Einheit 16 kann zusätzlich oder alternativ nach Erhalt der Warnmeldung W die fahrzeugexterne Einheit 16 beispielsweise eine unidirektionale oder bidirektionale Sprachverbindung zu dem Kraftfahrzeug 12 aufnehmen. Dazu kann das Kraftfahrzeug 12 beispielsweise Lautsprecher im Innenraum aufweisen. Über die Sprachverbindung kann die fahrzeugexterne Einheit 16 mit dem Fahrer oder Benutzer des Kraftfahrzeugs 12 kommunizieren. Wird beispielsweise die Warnmeldung W an das portable mobile Endgerät übermittelt, so kann das Kraftfahrzeug 12 beispielsweise die der Erfassungseinrichtung hinterlegte Mobilfunknummer anrufen und darüber einer bidirektionale Sprachverbindung zu dem portablen mobilen Endgerät aufnehmen. Wird beispielsweise die Warnmeldung W an die Einsatzzentrale übermittelt, so kann zu der Einsatzzentrale eine unidirektionale oder bidirektionale Sprachverbindung aufgebaut werden. Über die Sprachverbindung kann die Einsatzzentrale Anweisungen an den Fahrer des Kraftfahrzeugs ausgeben. Beispielsweise kann die Einsatzzentrale den Fahrer auffordern, das Kraftfahrzeug 12 bei der nächstmöglichen Gelegenheit zum Stillstand zu bringen.

Insgesamt ist durch die Erfindung ein Verfahren zum interaktiven Stilllegen eines Kraftfahrzeugs auf Grund einer Abwesenheit einer funkbasierten Fernbedieneinrichtung oder eines Schlüssels in einem Innenraum des Kraftfahrzeugs beschrieben.

Wird durch die Keyless-Funktion im Fahrbetrieb kein gültiger Fahrzeugschlüssel im Fahrzeuginnenraum erkannt, wird ein Warnhinweis im Fahrzeug ausgegeben. Die Ausgabe des Warnhinweises kann mittels einer Ausgabeeinheit, wie einem Display, im Innenraum des Fahrzeugs erfolgen. Nach Ausgabe des Warnhinweises mittels der Ausgabeeinheit im Fahrzeuginnenraum (key not found) und nach erfolgten wiederholten Schlüsselsuchen (sog. retries) wird nach einer einstellbaren Zeit eine entsprechende Information über ein fest im Fahrzeug verbautes Kommunikationssystem, wie zum Beispiel einen Connect Dienst, versendet. Es können dabei sowohl an das Fahrzeug angelernte Mobilfunknummern angewählt und informiert werden, als auch die Service-Zentrale des Herstellers. Bei Verdacht auf Diebstahl kann darauf hin über separat in der Fahrzeugelektronik verbaute oder implementierte Mechanismen ein Stilllegen des Fahrzeuges erfolgen.

## Patentansprüche

1. Verfahren zum Betreiben einer Diebstahlschutzvorrichtung (10) für ein Kraftfahrzeug (12), welches bei einem Empfangen eines Funksignals einer funkbasierten Fernbedieneinrichtung des Kraftfahrzeugs (12) entriegelt wird und nach dem Entriegeln durch Betätigen eines Start-Stopp-Bedienelements gestartet wird, umfassend die Schritte:
- Überwachen eines Innenraums des Kraftfahrzeugs (12) nach dem Starten des Kraftfahrzeugs (12) mittels einer Erfassungseinrichtung (14) der Diebstahlschutzvorrichtung (10), wobei
- die Erfassungseinrichtung (14) zum Überwachen des Innenraums des Kraftfahrzeugs (12) in dem Innenraum des Kraftfahrzeugs (12) ein auf den Innenraum beschränktes Suchsignal ausgibt, wobei die funkbasierte Fernbedieneinrichtung dazu eingerichtet ist, bei Empfangen des Suchsignals ein Erfassungssignal auszugeben, wobei
- falls ein Empfangen des Erfassungssignals mittels der Erfassungseinrichtung (14) bis zu einer vorbestimmten Suchzeit ausbleibt,
- Aussenden einer Warnmeldung (W) an eine fahrzeugexterne Einheit (16), **dadurch gekennzeichnet, dass**
- die fahrzeugexterne Einheit (16) eine Servicezentrale eines Herstellers des Kraftfahrzeugs (12) oder eine Einsatzzentrale umfasst, an welche die Erfassungseinrichtung (14) die Warnmeldung ausgibt, wobei
- nach Empfangen der Warnmeldung (W) zwischen der fahrzeugexternen Einheit (16) und dem Kraftfahrzeug (12) eine unidirektionale oder bidirektionale Sprachverbindung aufgebaut wird und
- die fahrzeugexterne Einheit (16) nach Empfangen der Warnmeldung (W) ein Steuersignal (S) an das Kraftfahrzeug (12) ausgibt, wobei durch das Steuersignal (S) ein Fahrbetrieb des gestarteten Kraftfahrzeugs (12) gesteuert wird, wobei
- die fahrzeugexterne Einheit (16) nach dem Empfangen der Warnmeldung (W) zusätzlich eine Position des Kraftfahrzeugs (12) erfasst und das Steuersignal (S) in Abhängigkeit von der Position des Kraftfahrzeugs (12) ausgibt.

2. Verfahren nach Anspruch 1,
**dadurch gekennzeichnet, dass**
die Erfassungseinrichtung (14) die Warnmeldung (W) an eine in der Erfassungseinrichtung (14) hinterlegte Mobilfunknummer eines portablen mobilen Endgeräts ausgibt.

3. Verfahren nach einem der vorhergehenden Ansprüche,
**dadurch gekennzeichnet, dass**
zusätzlich zum dem Ausgeben der Warnmeldung (W) an die fahrzeugexterne Einheit (16) ein Hinweissignal über eine Ausgabeeinheit, welche in dem Innenraum des Kraftfahrzeugs (12) angeordnet ist, ausgegeben wird.

4. Diebstahlschutzvorrichtung (10) für ein Kraftfahrzeug (12) umfassend:
- eine Erfassungseinrichtung (14), welche dazu eingerichtet ist, einen Innenraum des Kraftfahrzeugs (12) nach einem Starten des Kraftfahrzeugs (12) zu überwachen, wobei
- die Erfassungseinrichtung (14) dazu eingerichtet ist, zum Überwachen des Innenraums des Kraftfahrzeugs (12) in dem Innenraum des Kraftfahrzeugs (12) ein auf den Innenraum beschränktes Suchsignal auszugeben, wobei
- die Erfassungseinrichtung (14) nur dann dazu eingerichtet ist, eine Warnmeldung (W) an eine fahrzeugexterne Einheit (16) auszugeben, falls ein Empfangen eines Erfassungssignals nach dem Ausgeben des Suchsignals ausbleibt,
**dadurch gekennzeichnet, dass**
- die fahrzeugexterne Einheit (16) eine Servicezentrale eines Herstellers des Kraftfahrzeugs (12) oder eine Einsatzzentrale umfasst, an welche die Erfassungseinrichtung (14) die Warnmeldung ausgibt, wobei
- die fahrzeugexterne Einheit (16) dazu eingerichtet ist, nach Empfangen der Warnmeldung (W) zwischen der fahrzeugexternen Einheit (16) und dem Kraftfahrzeug (12) eine unidirektionale oder bidirektionale Sprachverbindung aufzubauen, wobei
- die fahrzeugexterne Einheit (16) ferner dazu eingerichtet ist, nach Empfangen der Warnmeldung (W) ein Steuersignal (S) an das Kraftfahrzeug (12) auszugeben, wobei durch das Steuersignal (S) ein Fahrbetrieb des gestarteten Kraftfahrzeugs (12) steuerbar ist, wobei
- die fahrzeugexterne Einheit (16) ferner dazu eingerichtet ist, nach dem Empfangen der Warnmeldung (W) zusätzlich eine Position des Kraftfahrzeugs (12) zu erfassen und das Steuersignal (S) in Abhängigkeit von der Position des Kraftfahrzeugs (12) auszugeben.

5. Diebstahlschutzvorrichtung (10) nach Anspruch 4,
**dadurch gekennzeichnet, dass**
die Erfassungseinrichtung (14) dazu eingerichtet ist, mittels Nahfeldkommunikation das Suchsignal zu senden und/oder das Erfassungssignal zu empfangen.

6. Kraftfahrzeug (12) mit einer Diebstahlschutzvorrichtung (10) nach einem der Ansprüche 4 oder 5.

## Claims

1. Method for operating an anti-theft device (10) for a motor vehicle (12) which is unlocked when a radio signal is received from a radio-based remote control device of the motor vehicle (12) and, after unlocking, is started by actuating a start/stop operating element, comprising the steps:
- monitoring an interior of the motor vehicle (12) by means of a detection device (14) of the anti-theft device (10) after the motor vehicle (12) has been started, wherein
- the detection device (14) for monitoring the interior of the motor vehicle (12) outputs a search signal restricted to the interior in the interior of the motor vehicle (12), wherein the radio-based remote control device is configured to output a detection signal when the search signal is received, wherein
- if the detection signal is not received by means of the detection device (14) before a predetermined search time,
- sending a warning message (W) to a unit (16) outside the vehicle,
**characterised in that**
- the unit (16) outside the vehicle comprises a service centre of a manufacturer of the motor vehicle (12) or an operations centre to which the detection device (14) outputs the warning message, wherein
- after receiving the warning message (W) a unidirectional or bidirectional voice connection is established between the unit (16) outside the vehicle and the motor vehicle (12) and
- the unit (16) outside the vehicle, after receiving the warning message (W), outputs a control signal (S) to the motor vehicle (12), wherein the control signal (S) controls a driving operation of the started motor vehicle (12),
- the unit (16) outside the vehicle, after receiving the warning message (W), additionally detects a position of the motor vehicle (12) and outputs the control signal (S) depending on the position of the motor vehicle (12).

2. Method according to claim 1,
**characterised in that**
the detection device (14) outputs the warning message (W) to a mobile number of a portable mobile terminal stored in the detection device (14).

3. Method according to any one of the preceding claims,
**characterised in that**
in addition to outputting the warning message (W) to the unit (16) outside the vehicle, a warning signal is output via an output unit which is arranged in the interior of the motor vehicle (12).

4. Anti-theft device (10) for a motor vehicle (12) comprising:
- a detection device (14) which is configured to monitor an interior of the motor vehicle (12) after the motor vehicle (12) is started, wherein
- the detection device (14) is configured, in order to monitor the interior of the motor vehicle (12), to output a search signal restricted to the interior in the interior of the motor vehicle (12), wherein
- the detection device (14) is only configured to output a warning message (W) to a unit (16) outside the vehicle if a detection signal is not received after the search signal has been output,
**characterised in that**
- the unit (16) outside the vehicle comprises a service centre of a manufacturer of the motor vehicle (12) or an operations centre to which the detection device (14) outputs the warning message, wherein
- the unit (16) outside the vehicle is configured, after receiving the warning message (W), to establish a unidirectional or bidirectional voice connection between the unit (16) outside the vehicle and the motor vehicle (12), wherein
- the unit (16) outside the vehicle is further configured, after receiving the warning message (W), to output a control signal (S) to the motor vehicle (12), wherein the control signal (S) controls a driving operation of the started motor vehicle (12), wherein
- the unit (16) outside the vehicle is further configured, after receiving the warning message (W), to additionally detect a position of the motor vehicle (12) and output the control signal (S) depending on the position of the motor vehicle (12).

5. Anti-theft device (10) according to claim 4,
**characterised in that**
the detection device (14) is configured, by means of near-field communication, to send the search signal and/or to receive the detection signal.

6. Motor vehicle (12) comprising an anti-theft device (10) according to any one of claims 4 or 5.

## Revendications

1. Procédé d'utilisation d'un dispositif antivol (10) pour un véhicule à moteur (12), lequel est déverrouillé lors de la réception d'un signal radio provenant d'un appareil de commande à distance radio du véhicule à moteur (12) et est démarré après déverrouillage en actionnant un élément de commande marche/arrêt, comprenant les étapes consistant à :
- surveiller l'espace intérieur du véhicule à moteur (12) après le démarrage du véhicule à moteur (12) au moyen d'un appareil de détection (14) du dispositif antivol (10), dans lequel
- l'appareil de détection (14) pour surveiller l'espace intérieur du véhicule à moteur (12) dans l'espace intérieur du véhicule à moteur (12) émet un signal de recherche limité à l'espace intérieur du véhicule à moteur, dans lequel l'appareil de commande à distance radio est configuré pour émettre un signal de détection lors de la réception du signal de recherche, dans lequel
- dans le cas où une réception du signal de détection n'arrive pas au moyen de l'appareil de détection (14) jusqu'à un temps de recherche prédéterminé,
- envoyer un message d'avertissement (W) à une unité extérieure au véhicule (16), **caractérisé en ce que**
- l'unité extérieure au véhicule (16) comprend une centrale de service d'un constructeur du véhicule à moteur (12) ou une centrale d'intervention, à laquelle l'appareil de détection (14) émet le message d'avertissement, dans lequel
- après la réception du message d'avertissement (W), une connexion vocale unidirectionnelle ou bidirectionnelle est établie entre l'unité extérieure au véhicule (16) et le véhicule à moteur (12) et
- l'unité extérieure au véhicule (16), après la réception du message d'avertissement (W), émet un signal de contrôle (S) vers le véhicule à moteur (12), dans lequel un mode de conduite du véhicule à moteur démarré (12) est contrôlé par le signal de contrôle (S), dans lequel
- l'unité extérieure au véhicule (16), après la réception du message d'avertissement (W), détecte en plus une position du véhicule à moteur (12) et émet le signal de contrôle (S) en fonction de la position du véhicule à moteur (12).

2. Procédé selon la revendication 1,
**caractérisé en ce que**
l'appareil de détection (14) émet le message d'avertissement (W) vers un numéro de téléphone mobile d'un terminal mobile portable déposé dans l'appareil de détection (14).

3. Procédé selon l'une quelconque des revendications précédentes,
**caractérisé en ce qu'**
en plus de l'émission du message d'avertissement (W) à l'unité extérieure au véhicule (16), un signal d'indication est émis via une unité d'émission, laquelle est agencée dans l'espace intérieur du véhicule à moteur (12).

4. Dispositif antivol (10) pour un véhicule à moteur (12) comprenant :
- un appareil de détection (14), lequel est conçu pour surveiller un espace intérieur du véhicule à moteur (12) après un démarrage du véhicule à moteur (12), dans lequel
- l'appareil de détection (14) est conçu pour émettre un signal de recherche limité à l'espace intérieur dans l'espace intérieur du véhicule à moteur (12) pour surveiller l'espace intérieur du véhicule à moteur (12), dans lequel
- l'appareil de détection (14) n'est conçu que pour émettre un message d'avertissement (W) vers une unité extérieure au véhicule (16) dans le cas où une réception d'un signal de détection n'arrive pas après l'émission du signal de recherche,
**caractérisé en ce que**
- l'unité extérieure au véhicule (16) comprend une centrale de service d'un constructeur du véhicule à moteur (12) ou une centrale d'intervention, à laquelle l'appareil de détection (14) émet le message d'avertissement, dans lequel
- l'unité extérieure au véhicule (16) est conçue pour établir, après la réception du message d'avertissement (W), une connexion vocale unidirectionnelle ou bidirectionnelle entre l'unité extérieure au véhicule (16) et le véhicule à moteur (12), dans lequel
- l'unité extérieure au véhicule (16) est conçue en outre pour émettre, après la réception du message d'avertissement (W), un signal de contrôle (S) vers le véhicule à moteur (12), dans lequel un mode de conduite du véhicule à moteur démarré (12) peut être contrôlé par le signal de contrôle (S), dans lequel
- l'unité extérieure au véhicule (16) est conçue en outre pour détecter en plus, après la réception du message d'avertissement (W), une position du véhicule à moteur (12) et pour émettre le signal de contrôle (S) en fonction de la position du véhicule à moteur (12).

5. Dispositif antivol (10) selon la revendication 4,
**caractérisé en ce que**
l'appareil de détection (14) est conçu pour envoyer le signal de recherche et/ou pour recevoir le signal de détection au moyen d'une communication en champ proche.

6. Véhicule à moteur (12) avec un dispositif antivol (10) selon l'une quelconque des revendications 4 ou 5.
